# EUROPEAN PATENT APPLICATION

(11) **EP 3 760 976 A1**
(43) Date of publication of application: **06.01.2021**
(21) Application number: 18907673.0
(22) Date of filing: 27.02.2018
(51) Int. Cl.: G01C 21/34

(54) **AUTOMATIC DRIVING CONTROL DEVICE, AUTOMATIC DRIVING CONTROL METHOD, AND AUTOMATIC DRIVING CONTROL PROGRAM**

(71) Applicant: Pioneer Corporation, Tokyo 113-0021 (JP)
(72) Inventor: NAKAMOTO Shogo, Kawagoe-shi, Saitama 350-8555 (JP); HATA Kazuya, Kawagoe-shi, Saitama 350-8555 (JP)
(74) Representative: Isarpatent
(86) International application number: PCT/JP2018/007200
(87) International publication number: WO 2019/167114

(57) **Abstract**

The present invention relates to a technical field such as an automated driving control device for a moving object, and it is an object thereof to speed up arrival at the destination by effectively utilizing required time for input of the destination.

Therefore, a temporary destination which functions as a temporary destination until a true destination which is a true destination of a moving object capable of automated driving is set, and automated driving of the moving object is started toward the temporary destination before the true destination is set.

## Description

### Technical Field

The present application relates to a technical field of an automated driving control device or the like for a moving object.

Technology for automated driving control has been developed to enable autonomous driving of a moving object without a need for a driver to operate the moving object such as a car. For example, Patent Literature 1 discloses a technology in which a card-type personal computer (PC) with a destination stored in advance is inserted into a computer installed in a vehicle capable of automated driving control, the computer sets a driving route to the destination, and causes the vehicle to automatedly drive to the destination.

### Citation List

### Patent Literature

Patent Literature 1: Japanese Unexamined Patent Publication No. H11-282530

### Summary of Invention

### Technical Problem

However, in the technology described in Patent Literature 1, the automated travel does not start until the card-type PC is inserted into the computer (i.e., until the destination is entered), causing corresponding delays in arrival at the destination.

In view of the above circumstances, an example problem to be solved by the present invention is to provide an automated driving control device or the like capable of speed-up arrival at a destination by effectively utilizing required time for input of the destination.

### Solution to Problem

An invention described in claim 1 is an automated driving control device, comprising: a temporary destination setting means that sets a temporary destination which functions as a temporary destination until a true destination, which is a true destination of a moving object capable of automated driving, is set based on movement history information of a user boarding the moving object; and an automated driving control means that starts automated driving of the moving object toward the temporary destination before the true destination is set.

An invention described in claim 7 is an automated driving control method by an automated driving control device, comprising: a step of setting a temporary destination which functions as a temporary destination until a true destination, which is a true destination of a moving object capable of automated driving, is set based on movement history information of a user boarding the moving object; and a step of starting automated driving of the moving object toward the temporary destination before the true destination is set.

An invention described in claim 8 is an automated driving control program causing a computer to execute as: a temporary destination setting means that sets a temporary destination which functions as a temporary destination until a true destination, which is a true destination of a moving object capable of automated driving, is set based on movement history information of a user boarding the moving object; and an automated driving control means that starts automated driving of the moving object toward the temporary destination before the true destination is set.

### BRIEF DESCRIPTION OF THE DRAWINGS

Fig. 1 is a block diagram illustrating a configuration example of an automated driving control device 1.
Fig. 2 is a block diagram illustrating a configuration example of an automated driving control device 200.
Fig. 3 illustrates an example screen of a temporary destination selection screen 510.
Fig. 4(A) illustrates an example screen of a temporary direction selection screen 520, and Fig. 4(B) illustrates an example screen of a temporary direction selection screen 530.
Fig. 5 is a conceptual diagram for explaining a temporary destination changing function.
Fig. 6 is a conceptual diagram for explaining a temporary destination changing function.
Fig. 7 is a conceptual diagram for explaining first input standby control.
Fig. 8 is a conceptual diagram for explaining second input standby control.
Fig. 9 is a flowchart illustrating an example of automated driving control processing by the automated driving control device 200.
Fig. 10 is a flowchart illustrating an example of temporary destination setting processing by the automated driving control device 200.
Fig. 11 is a flowchart illustrating an example of input standby processing performed by the automated driving control device 200.

### MODES FOR CARRYING OUT THE INVENTION

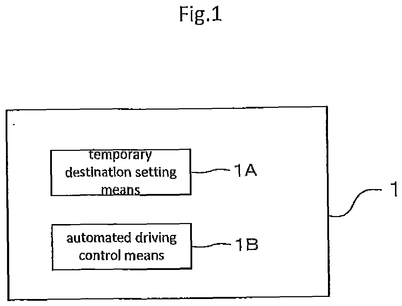

A mode for carrying out the present invention is described with reference to Fig. 1.

As illustrated in Fig. 1, an automated driving control device 1 includes a temporary destination setting means 1A and an automated driving control means 1B.

The temporary destination setting means 1A sets a temporary destination which functions as a temporary destination until a true destination, which is a true destination of a moving object capable of automated driving, is set based on movement history information of a user boarding the moving object. The moving object is, for example, an automobile, a motorcycle, a bicycle, an airplane, or the like.

The automated driving control means 1B starts automated driving of the moving object toward the temporary destination before the true destination is set. Start of the automated driving includes (1) switching from a stopped state to a moving state by automated driving, and (2) switching from a moving state by manual operation to a moving state by automated driving.

According to the automated driving control device 1, the temporary destination of the moving object is set before the true destination is set, and the automated driving of the moving object toward the temporary destination starts before the true destination is set, so that movement is possible by effectively using required time for input of the true destination and arrival at the destination can be sped up. In addition, the temporary destination is set based on the movement history information of the user boarding the moving object, so that the temporary destination that reflects behavioral characteristics of the user can be set and a possibility of setting the temporary destination that may delay the arrival at the true destination can be decreased.

### [Example]

Next, a specific example corresponding to the above-described embodiment is described. The example described below is an example in which the present invention is applied to an automated driving control device mounted on a vehicle. The automated driving control device can select two modes: an automated driving mode and a manual driving mode. The automated driving mode controls to realize automated driving of the vehicle. In addition, the present invention only needs to include at least an automated driving function, and the automated driving control device of the present invention may be included in a full automated vehicle.

### [1. Configuration of Automated Driving Control Device]

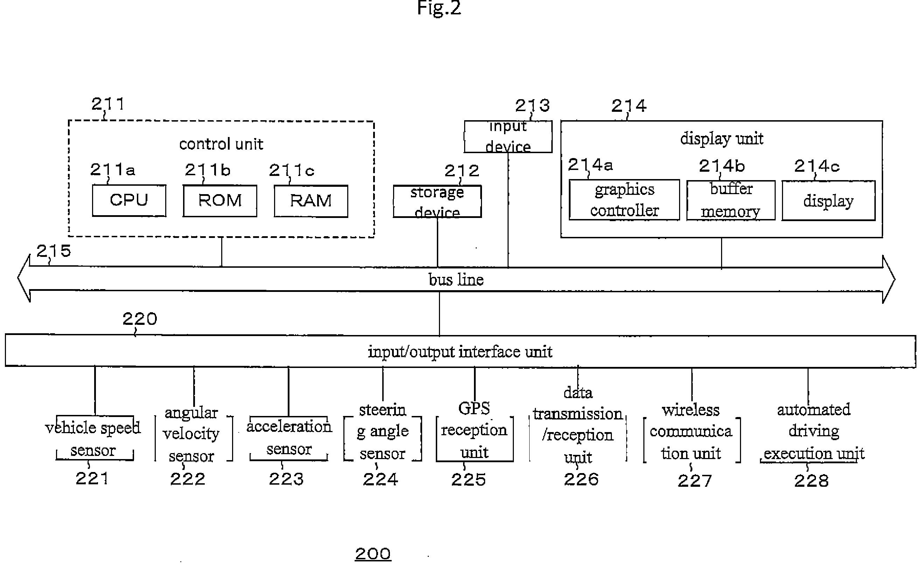

First, the configuration of an automated driving control device 200 according to the present example is described with reference to Fig. 2. As illustrated in Fig. 2, the automated driving control device 200 includes a control unit 211, a storage device 212 including a non-volatile memory, an HDD, and the like, an input device 213 including a keyboard, a remote controller, a touch panel, and the like, a display unit 214, a bus line 215, an input/output interface unit 220, a vehicle speed sensor 221, an angular velocity sensor 222, an acceleration sensor 223, a steering angle sensor 224, a GPS reception unit 225, a data transmission/reception unit 226, a wireless communication unit 227, and an automated driving execution unit 228.

The vehicle speed sensor 221 detects a current speed of the vehicle by speed detection processing or the like using a vehicle speed pulse or the like acquired from the vehicle including the automated driving control device 200, and outputs speed data. The angular velocity sensor 222 detects, for example, an angular velocity of a change in direction of the vehicle, and outputs angular velocity data and relative azimuth data per unit time. The acceleration sensor 223 detects, for example, longitudinal acceleration of the vehicle, and outputs acceleration data or the like per unit time. The steering angle sensor 224 detects the steering angle of the vehicle and outputs steering angle data and the like. The GPS reception unit 225 receives navigation radio waves from a GPS satellite and outputs, as GPS positioning data, vehicle position information (current position information) such as latitude, longitude, altitude data, absolute azimuth data of the moving direction of the vehicle, GPS speed data, and the like. The data transmission/reception unit 226 performs processing relating to data transmission/reception to and from a server device via the network. The wireless communication unit 227 performs processing for road-to-vehicle and vehicle-to-vehicle communication in a wireless manner.

The automated driving execution unit 228 controls speed and a steering wheel of the vehicle under the control of the control unit 211 when the automated driving mode is selected. For example, the automated driving execution unit 228 controls the speed of the own vehicle by adjusting the amount of fuel to be injected, reduces the speed of the own vehicle by applying the brakes, adjusts the steering angle of the steering wheel to adjust the moving direction of the vehicle, and the like.

The storage device 212 stores various programs such as an operating system, an automated driving control program, and the like. Note that the various programs may be acquired from, for example, a server device or the like via a network, or may be executed by reading a program recorded in a recording medium such as a CD, a DVD, or a USB memory.

In addition, the storage device 212 stores map image data for displaying a map on the display unit 214, map information used when a route is searched for, road link information, and the like.

The input device 213 includes a touch panel, a keyboard, a mouse, other controllers, and the like, receives input operation of the user, and transmits an operation signal indicating the operation content to the control unit 211.

The display unit 214 displays various display data under the control of the control unit 211. The display unit 214 includes a graphics controller 214a, a buffer memory 214b including a memory such as a video RAM (VRAM), a display 214c including, for example, a liquid crystal display, and the like. In this configuration, the graphics controller 214a controls the entire display unit 214 based on the control data sent from the control unit 211 via the bus line 215. In addition, the buffer memory 214b temporarily stores image information that can be displayed immediately. Then, an image is displayed on the display 214c based on the image data output from the graphics controller 214a.

The control unit 211 includes a CPU 211a that controls the entire control unit 211, a ROM 211 b in which a control program or the like for controlling the control unit 211 is stored in advance, and a RAM 211c that temporarily stores various types of data. The control unit 211 is connected to the vehicle speed sensor 221, the angular velocity sensor 222, the acceleration sensor 223, the steering angle sensor 224, and the GPS reception unit 225 via the bus line 215 and the input/output interface unit 220 and, based on the speed data, the angular velocity data, the relative azimuth data, the steering angle data, the GPS positioning data, the absolute azimuth data of the moving direction of the vehicle, the acceleration data, and the like, controls the entire automated driving control device 200 as well as controlling operations of various structural components such as the display unit 214.

### [2. Function of Automated Driving Control Device 200]

Next, the function of the automated driving control device 200 is described. Note that a true destination originally intended by the passenger of a vehicle C equipped with the automated driving control device 200 is referred to as a "true destination", and a destination set temporarily until the user of the automated driving control device 200 (e.g., the passenger boarding the own vehicle) sets the true destination is referred to as a "temporary destination".

### [2.1. Temporary Destination Setting Function]

The control unit 211 sets the temporary destination when the automated driving mode is selected, or when the automated driving control device 200 is activated while the automated driving mode is selected and no true destination is set. Note that the true destination may be set manually by the user or by a true destination estimating unit (not illustrated) estimating the true destination based on the past movement history information of the user. In addition, when the control unit 211 sets the temporary destination, the vehicle C may be in a stopped state or a travelling state. Then, when the temporary destination is set, the control unit 211 searches for a route to the temporary destination and starts automated driving of the vehicle C toward the temporary destination before the true destination is set. That is, if the vehicle C is in the stopped state, the movement by the automated driving is initiated, and if the automated driving mode is selected while the vehicle C is moving in the manual driving mode, the vehicle C is switched from the movement by the manual driving to the movement by the automated driving. Note that the control unit 211 switches from the automated driving toward the temporary destination to the automated driving toward the true destination based on the fact that the true destination is set during the movement by the automated driving.

Next, a method of setting the temporary destination is described. The control unit 211 can set the temporary destination by any of the following:
(1) A point predetermined by the user
(2) A point connecting from the current position of the vehicle C to a road of a predetermined rank or a higher rank
(3) A point based on the movement history information of the user
(4) A point selected by the user

As in (1), when the user has previously set a point as the temporary destination, the control unit 211 sets the point as the temporary destination.

In the case of (2), the storage device 212 stores rank information indicating the rank for each road link formed by dividing the road into a plurality of road parts. For example, the rank information may be assigned to expressways as rank 1, national roads as rank 2, prefectural roads as rank 3, municipal roads as rank 4, and other roads as rank 5, or rank information may be set according to the number of lanes and width of the road. Then, the control unit 211 may, for example, set the nearest point connecting to an arterial road (a road of rank 2) as the temporary destination when the vehicle C is present on a road in a residential area (a road of rank 5) or in a parking lot bordering such road.

In the case of (3), the storage device 212 stores the movement history information indicating the past movement history of each user (e.g., father, mother, child). Note that it does not matter if the user in question is the driver. In addition, the movement history information may be stored for each combination of users (e.g., combination of father and mother, combination of mother and child, or the like).

Then, based on the movement history information, the control unit 211 sets, as the temporary destination, a point that is located within a predetermined range (e.g., within a radius of 500 m) from the current position of the vehicle C and that the user has visited or passed in the past. This predetermined range may be set by the user or may be set by the manufacturer of the automated driving control device 200.

In addition, based on the movement history information, the control unit 211 may set, as the temporary destination, a point that is located within a predetermined range (e.g., within 500 meters) from the current position of the vehicle C and that the user has visited or passed most frequently in the past. In addition, based on the movement history information, a point presumed to be a point that the user is likely to visit may be set as the temporary destination.

Furthermore, the control unit 211 may set, as the temporary destination, a point that the user has passed most frequently among a plurality of points that the user has passed while the vehicle C is moving from the current position. At this time, the "point" of the plurality of points passed when the vehicle C moves from the current position can be, for example, the branch point located on the nearest side in each direction in which the vehicle C can move with respect to the current position. Specifically, when the current position of the vehicle C is a parking lot bordering a road extending from north to south, and if the vehicle C has passed both the branch point of the road heading north and the branch point of the road heading south, the control unit 211 may set the branch point that has been passed more frequently as the temporary destination.

Thus, by setting the temporary destination based on the movement history information of the user, the temporary destination compatible with the behavioral characteristics of the user can be set. Note that the movement history information of the user moving in another vehicle (e.g., a rental car) may be obtained from an external server device or a portable terminal of the user that stores the movement history.

In the case of (3), the control unit 211 may set the temporary destination by additionally considering the weather conditions, temperature, day of the week, time of day, and other factors during the movement. Specifically, the movement history information to be stored in the storage device 212 includes the points that the user has visited or passed in the past and past environmental information which is information relating to at least one of weather conditions, temperature, day of the week, and time of day of the past time. Furthermore, the control unit 211 acquires current environmental information which is information relating to at least one of the current weather conditions, temperature, day of the week, and time of day. Then, the control unit 211 sets the temporary destination based on at least one of the current environmental information and the past environmental information.

For example, point A is set as the temporary destination on the condition that the storage device 212 stores the movement history information including the past environmental information indicating that the weather conditions were sunny, the current temperature was between 25 and 30 degrees Celsius, the day of the week was Sunday, and the time of day was between 14:00 and 16:00 at the past visit of point A, and that the control unit 211 has acquired the current environmental information indicating that the current weather conditions are sunny, the current temperature is between 25 and 30 degrees Celsius, the current day of the week is Sunday, and the current time of day is between 14:00 and 16:00. In addition, point B can be set as the temporary destination on the condition that, since the environmental information is information relating to at least one of weather conditions, temperature, day of the week, and time of day, the storage device 212 stores the movement history information including the past environmental information of the past visit to the point B indicating that the day of the week was Monday and the time of day was between 7:00 and 9:00, and that the control unit 211 acquires the current environmental information that the current day of the week is Monday and the current time of day is between 7:00 and 9:00.

In the case of (3), the temporary destination reflecting the behavioral characteristics of the user can be set according to at least one of the weather conditions, the temperature, the day of the week, and the time of day.

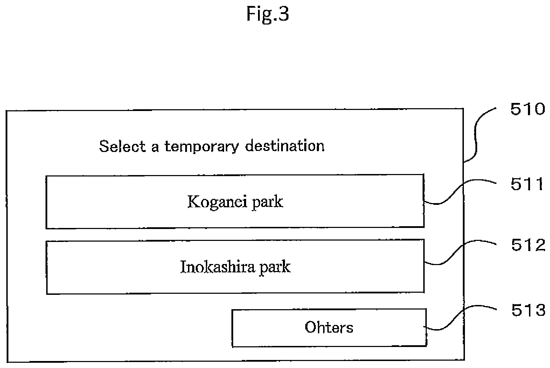

In the case of (4), as illustrated in Fig. 3, for example, the temporary destination selection screen 510 may be displayed on the display 214c to present the user with candidate places of the temporary destination to select the candidate. The control unit 211 sets Koganei park as the temporary destination when a button 511 is touched, while setting Inokashira park as the temporary destination when a button 512 is touched. In addition, when a button 513 is touched, the control unit 211 causes another temporary destination candidate to be displayed. Note that the points illustrated in (1) to (3) above may be displayed as the candidate temporary destinations to be displayed on the temporary destination selection screen 510.

Note that it is preferable that the user can select which of the setting methods (1) to (4) is used to set the temporary destination. In the present example, the setting method of (1) is associated with the option 1, the setting method of (2) is associated with the option 2, the setting method of the (3) is associated with the option 3, and the setting method of the (4) is associated with the option 4. Then, the storage device 212 is assumed to store the temporary destination option information indicating the option selected by the user.

### [2.2. Temporary Direction Setting Function]

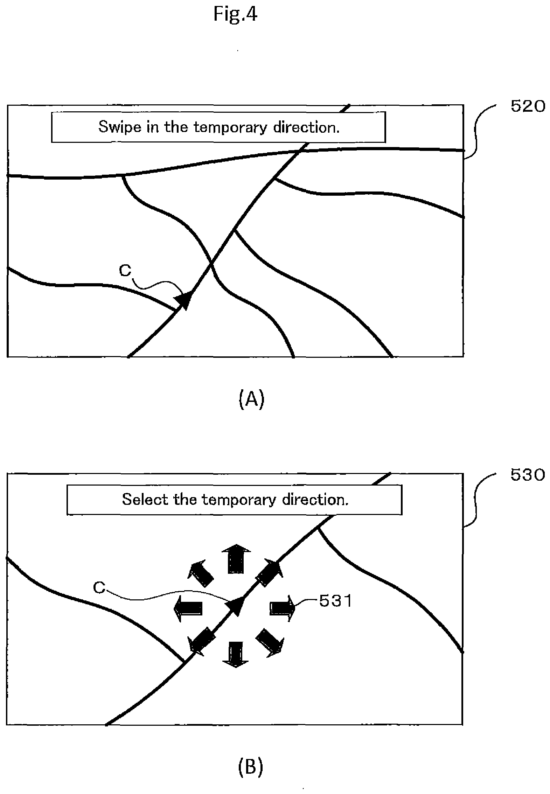

Instead of setting the temporary destination according to [2.1. Temporary Destination Setting Function], the control unit 211 may temporarily set a direction in which the vehicle C moves from the current position and which is specified by the user (which is referred to as a "temporary direction") until the true destination is set. For example, as illustrated in Fig. 4(A), a map illustrating the current position of the vehicle C and a temporary direction selection screen 520 for prompting the user to select a temporary direction may be displayed on the display 214c, and the temporary direction may be input by swiping. For example, if northeast is selected by swiping on the temporary direction selection screen 520, the control unit 211 sets northeast as the temporary direction. Furthermore, as illustrated in Fig. 4(B), the temporary direction selection screen 530 in which the user is presented with arrows 531 indicating candidate temporary directions to display to prompt the user to select is displayed on the display 214c. The control unit 211 sets the direction indicated by a touched arrow 531 to the temporary direction. Then, once the temporary direction is set, the control unit 211 starts the automated driving of the vehicle C in the temporary direction before the true destination is set. Note that when the temporary direction is set, the control unit 211 may search for a route to a point existing in the temporary direction and initiates movement on the route.

Note that the control unit 211 may set, as the temporary destination, a point located at a predetermined distance from the current position of the vehicle C (the predetermined distance may be extended (e.g., 600 to 800 meters away from the current position) and in the direction specified by the user (e.g., within ±10° of the direction specified by the user), when the user specifies a direction on the temporary direction selection screen 520. At this time, in addition to the above options 1 to 4, the user may further select option 5 for setting the temporary destination based on the temporary direction. In addition, the control unit 211 may set a representative point in the area including the point in the direction designated by the user as the temporary destination. For example, when the user specifies a certain point in Kawagoe City located in the northwest direction from the current position, the control unit 211 may set Kawagoe Station or Kawagoe City Hall, which is a representative point of Kawagoe City, as the temporary destination.

### [2.3. Temporary Destination Changing Function]

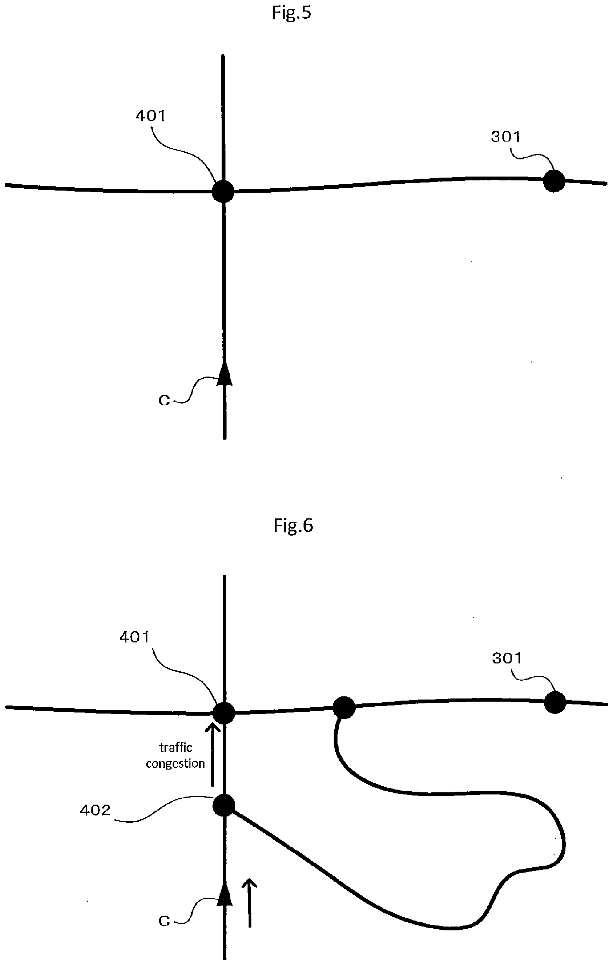

After setting the temporary destination or the temporary direction, the control unit 211 changes a risk point to the temporary destination if there is the risk point on the route. For example, as illustrated in Fig. 5, when point 301 is set as the temporary destination and point 401 on the route is a risk point, the temporary destination is changed from the point 301 to the point 401. A risk point is a branch point, and particularly a branch point at which at least one of moving time, a distance to be moved, and charges (e.g., tolls) required to return to the branch point in question exceeds a predetermined value when moving in one branch direction from the branch point. For example, the branch point may be a branch point on a general road toward an entrance (IC) to an expressway (including a toll road), a branch point on an expressway toward an exit (IC) from the expressway, an expressway branch point (e.g., a junction), a branch point toward an entrance to a one-way street (once entered a one-way road, it is not possible to go around and move on the same road to return to the branch point, but detour is required, so that moving time and distance increase), or the like. In addition, the risk point may be a branch point to a road including a point at which the traffic congestion or traffic accident occurs at a high possibility. Note that the risk point may be stored in the storage device 212 as map information or may be acquired from an external server device.

The control unit 211 may acquire the traffic congestion information (information indicating the beginning and ending positions of the traffic congestion) on the route to the initially-set temporary destination or temporary direction, and identify the risk point by referring to the traffic congestion information. For example, as illustrated in Fig. 6, when the point 301 is set as the temporary destination, the point 401 is usually (when there is no traffic congestion) identified as the risk point and the temporary destination is changed. If there is a traffic congestion between the current position (position of the vehicle C) and the point 401, an occurrence of a significant delay caused by being caught in the traffic congestion is regarded as a risk, and point 402, which is a point located in front of the ending position of the traffic congestion and includes a branch direction capable of avoiding the traffic congestion at least partially in moving toward the temporary destination, is identified as a risk point and the temporary destination is changed.

### [2.4. True Destination Input Standby Function]

In a case where the user does not complete input of the true destination before the time the vehicle C arrives at the temporary destination, there is no destination set after the arrival at the temporary destination, causing a risk of moving away from the true destination if the vehicle continues to move in an arbitrary direction. Therefore, the control unit 211 performs control to wait for the input of the true destination. Note that the control unit 211 may set the true destination based on the past movement history information of the user. For example, the control unit 211 presents the destination estimated to the user with reference to the past movement history information of the user (e.g., a message such as "Is the destination oo?" is displayed on the display 214c), and when the user approves the presentation, the destination presented to the user may be set as the true destination.

### [2.4.1. Before Moving: True Destination Input Standby Function]

In a case where the temporary destination is set while the vehicle C is stopped, the control unit 211 searches for a route from the current position to the temporary destination, and calculates a required moving time Tt for the vehicle C to arrive at the temporary destination. At this time, the control unit 211 preferably calculates the required moving time Tt by considering delay factors such as traffic congestion and weather conditions. For example, the control unit 211 calculates the required moving time Tt by adding time corresponding to the size of the traffic congestion, if occurred, or estimating the average moving speed to be lower if the weather conditions are snowy. In addition, the control unit 211 acquires a required input time Ti for the user to complete the input of the true destination. Then, the control unit 211 determines whether the user completes the input of the true destination before the vehicle C arrives at the temporary destination, based on the required moving time Tt and the required input time Ti. If it is determined that the user completes the input of the true destination before vehicle C arrives at the temporary destination, the control unit 211 starts to move the vehicle by automated driving of the moving object toward the temporary destination. If it is determined that the user does not complete the input of the true destination before the vehicle C arrives at the temporary destination, the control unit 211 puts the vehicle C on standby at the current position.

Note that the information indicating the average value of the past required input time of the user may be stored in the storage device 212, the external server device, or the like, and the control unit 211 may acquire the average value as the required input time Ti. In addition, information indicating the required input time (e.g., average required input time) according to at least one of age, gender, and time of purchase of the vehicle may be stored in the storage device 212, the external server device, or the like, and the control unit 211 may refer to such information to acquire the required input time Ti based on the age, gender, and time of purchase of the vehicle of the user. For example, the storage device 212 may store information that the required input time is 20 seconds in a case where the age group includes 18 to 29 years old, may store information that the required input time is 35 seconds in a case where the age group includes 30 to 39 years old and the gender is female, or may store information that the required input time is 60 seconds in a case where the age group includes 50 to 59 years old and the vehicle is purchased within one year. Then, the control unit 211 acquires the required input time Ti based on the information that matches the conditions of the user.

In addition, even during the input of the true destination by the user, the control unit 211 calculates the required moving time Tt, acquires the required input time Ti, and compares the required moving time Tt with the required input time Ti to determine whether the user completes the input of the true destination before the vehicle C arrives at the temporary destination. Then, the control unit 211 starts moving the vehicle C by automated driving toward the temporary destination, even if the user is still inputting, when a predetermined amount of time has elapsed after the user has started input of the true destination on the condition that it is determined that the user completes the input of the true destination before the vehicle C arrives at the temporary destination.

### [2.4.2. After Moving: True Destination Input Standby Function]

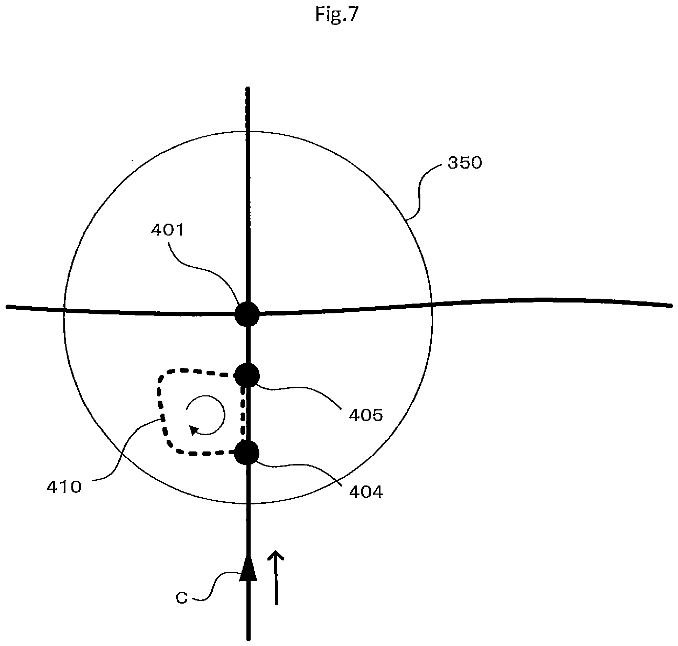

After searching for the route to the temporary destination of the vehicle C and starting the movement by the automated driving, the control unit 211 calculates the required moving time Tt to arrive at the temporary destination even when the user has not yet completed the input of the true destination. At this time, the control unit 211 preferably calculates the required moving time Tt by considering delay factors such as traffic congestion and weather conditions. In addition, the control unit 211 acquires a required input time Ti for the user to complete the input of the true destination. Then, the control unit 211 determines whether the user completes the input of the true destination before the vehicle C arrives at the temporary destination based on the required moving time Tt and the required input time Ti. If it is determined that the user completes the input of the true destination before the vehicle C arrives at the temporary destination, the control unit 211 continues to move the moving object by the automated driving toward the temporary destination. If it is determined that the user does not complete the input of the true destination before the vehicle C arrives at the temporary destination, the control unit 211 performs input standby control to put the vehicle C in a predetermined range of the temporary destination. For example, in Fig. 7, when the point 401 is set as the temporary destination, the input standby control is performed to put the point 401 to be within a circle 350 that represents the predetermined range of the temporary destination. This predetermined range may be set by the user or may be set by the manufacturer of the automated driving control device 200.

### [2.4.2.1. First Input Standby Control (Moving on Circuitous Route)]

As a first input standby control, the control unit 211 controls the vehicle C to move within a predetermined range (within the circle 350) until the input of the true destination of the user is completed. Specifically, the control unit 211 moves the vehicle C on a circuitous route which is a route circulating within the predetermined range (within the circle 350) until the input of the true destination by the user is completed. For example, as illustrated in Fig. 7, the control unit 211 searches for the circuitous route 410 to circulate the vehicle C. The circuitous route 410 may be a circuitous route including a part of the route to the temporary destination or a circuitous route deviating from the route. The circuitous route 410 is preferably a circuitous route with a minimum circulating time or circulating distance within the predetermined range (within the circle 350), so that the movement to the true destination can be started as soon as possible when the user completes the input of the true destination. In addition, the circuitous route 410 is preferably a circuitous route that returns to a point prior to the temporary destination (e.g., point 404, 405 in Fig. 7) on the route to the temporary destination by a scheduled input completion time at which the input of the true destination by the user is scheduled to be completed. This is because, if the circuitous route to return to a point beyond the temporary destination (based on the automated driving start position of the vehicle C) is selected, it may sometimes be necessary to once return to the temporary destination before moving to the true destination, and this may irritate the user. Furthermore, the circuitous route 410 may be a circuitous route that returns to the temporary destination within a predetermined time from the scheduled time of completion of the input of the true destination by the user.

### [2.4.2.2. Second Input Standby Control (Stop)]

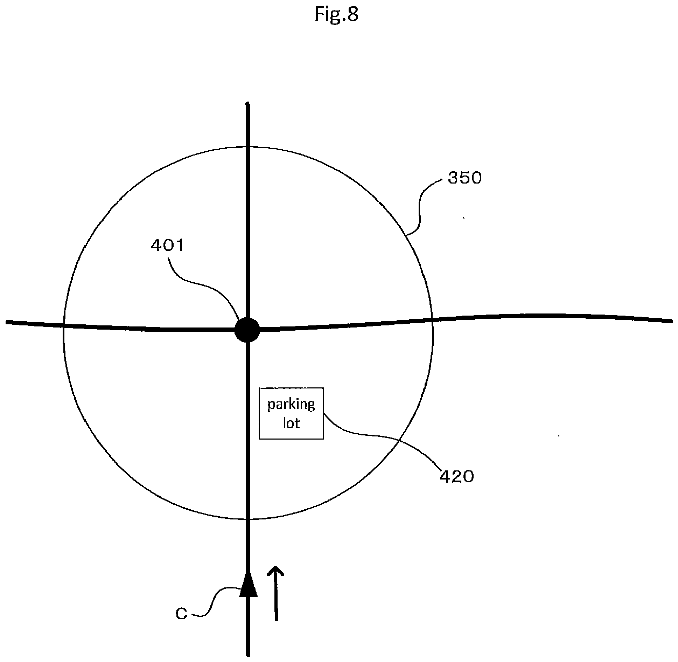

As a second input standby control, the control unit 211 may stop the vehicle within a predetermined range until the input of the true destination by the user is completed. Specifically, the control unit 211 stops the vehicle in a parking lot located within a predetermined range until the user inputs the true destination. For example, as illustrated in Fig. 8, the control unit 211 searches for a parking lot 420 within a predetermined range (within the circle 350) (preferably by searching for a parking lot where parking is possible by referring to vacancy information of the parking lot), and stops the vehicle C. The parking lot 420 near the temporary destination among the parking lots located within the predetermined range (within the circle 350) is preferable, so that the movement to the true destination can be started as soon as possible upon completion of the input of the true destination by the user. In addition, the parking lot 420 is preferably a parking lot bordering a point prior to the temporary destination on the route to the temporary destination within the predetermined time from the scheduled time of the input of the true destination by the user. This is because, if a parking lot bordering a point beyond the temporary destination (based on the start position of the automated driving of the vehicle C) is selected, it may sometimes be necessary to once return to the temporary destination before moving to the true destination, and this may irritate the user.

Note that the user may select either the first input standby control or the second input standby control, or may perform the first input standby control if it is determined that there is no parking lot within the predetermined range in the second input standby control. In the present example, it is assumed that the first input standby control is associated with option A and the second input standby control is associated with option B, and that the user can select the option. Then, the storage device 212 stores information of the input standby control option indicating the option selected by the user.

### [3. Automated Driving Control Processing]

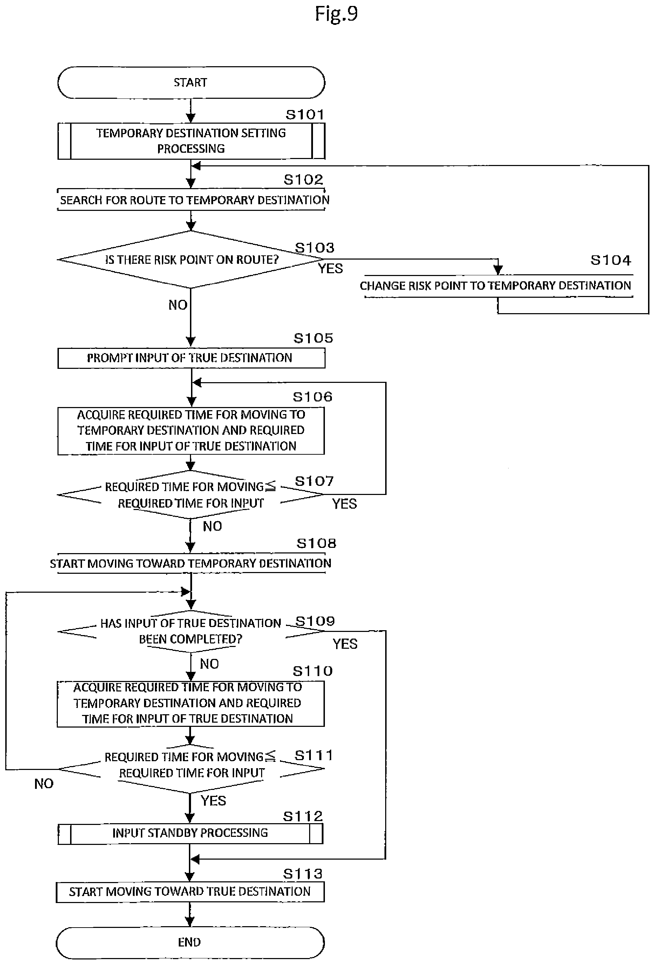

Next, the automated driving control processing by the control unit 211 of the automated driving control device 200 is described using a flowchart illustrated in Fig. 9. Note that the automated driving control processing starts when the automated driving mode is selected, or when the automated driving control device 200 is activated while the automated driving mode is selected.

First, the control unit 211 of the automated driving control device 200 performs temporary destination setting processing (step S101). Note that the temporary destination setting processing will be described later.

Next, the control unit 211 searches for a route from the current position of the vehicle C to the temporary destination (step S102).

Next, the control unit 211 determines whether there is a risk point on the route searched in the processing of step S102 (step S103). If it is determined that there is a risk point on the route (step S103: YES), the control unit 211 changes the risk point to a temporary destination (step S104), and proceeds to a processing step S102. On the other hand, if it is determined that there is no risk point on the route (step S103: NO), the control unit 211 prompts the user to input the true destination (step S105). For example, the control unit 211 causes the display 214c to display a message prompting the user to input the true destination, or causes the speaker (not illustrated) to speak.

Next, the control unit 211 acquires the required moving time Tt to the temporary destination and the required input time Ti of the true destination (step S106).

Next, the control unit 211 determines whether the required moving time Tt is equal to or less than the required input time Ti (step S107). If it is determined that the required moving time Tt is equal to or less than the required input time Ti (step S107: YES), the control unit 211 proceeds to the processing of step S106. On the other hand, if it is determined that the required moving time Tt is not equal to or less than the required input time Ti (step S107: NO), the control unit 211 starts the movement by the automated driving to the temporary destination (step S108). That is, the control unit 211 instructs standby at the current position until it is determined that the input of the true destination is in time for the arrival at the temporary destination. Then, when it is determined that the input of the true destination is in time for the arrival at the temporary destination, the movement by the automated driving is started. Note that the processing of steps S106 and S107 are skipped when the flowchart is started in the moving state of the vehicle C.

Next, the control unit 211 determines whether the input of the true destination has been completed (step S109). If it is determined that the input of the true destination has been completed (step S109: YES), the control unit 211 starts the movement by the automated driving toward the true destination (step S113) and ends the processing illustrated in the flowchart. On the other hand, if it is determined that the input of the true destination has not been completed (step S109: NO), the control unit 211 acquires the required moving time Tt to the temporary destination and the required input time Ti of the true destination (step S110). Note that, during the input of the true destination by the user, the control unit 211 acquires the remaining time until the scheduled input completion time as the required input time Ti. Note that the remaining time until the scheduled input completion time may be calculated by considering the input speed from the time when the user starts input of the true destination to the time in question.

Next, the control unit 211 determines whether the required moving time Tt is equal to or less than the required input time Ti (step S111). If it is determined that the required moving time Tt is not equal to or less than the required input time Ti (step S111: NO), the control unit 211 proceeds to the processing of step S109. On the other hand, if it is determined that the required moving time Tt is not equal to or less than the required input time Ti (step S111: YES), the control unit 211 starts the input standby processing (step S112), and then starts the movement by the automated driving toward the true destination (step S113) and ends the processing illustrated in the flowchart. Note that the input standby processing will be described later.

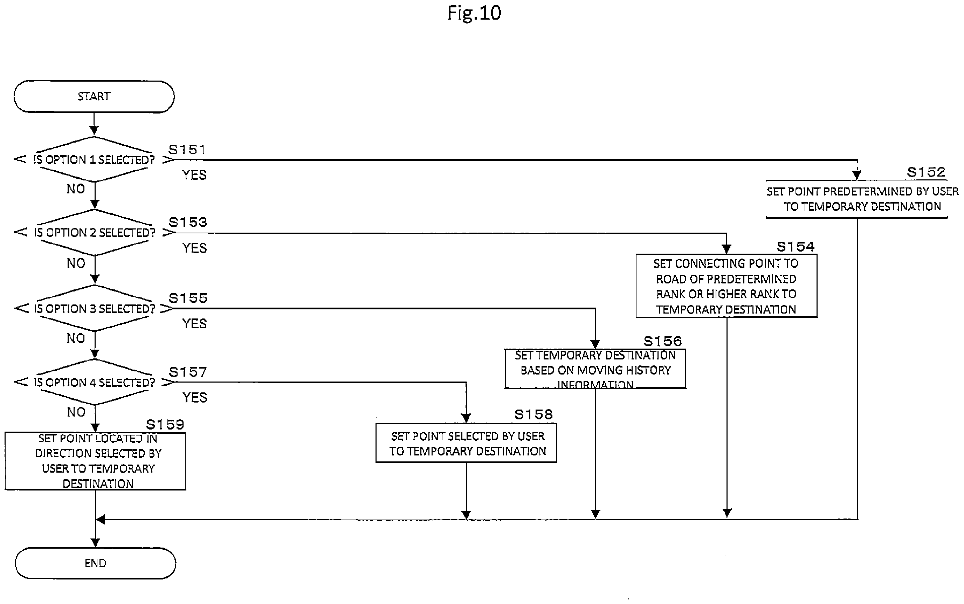

Next, the temporary destination setting processing by the control unit 211 of the automated driving control device 200 is described using the flowchart illustrated in Fig. 10.

First, the control unit 211 refers to the temporary destination option information stored in the storage device 212 and determines whether the option 1 is selected (step S151). If it is determined that the option 1 is selected (step S151: YES), the control unit 211 sets the point predetermined by the user as the temporary destination (step S152), and ends the temporary destination setting processing.

If it is determined that the option 1 is not selected (step S151: NO), the control unit 211 then determines whether the option 2 is selected (step S153). If it is determined that the option 2 is selected (step S153: YES), the control unit 211 sets a point connecting from the current position of the vehicle C to the road of a predetermined rank or a higher rank to the temporary destination (Step S154), and ends the temporary destination setting processing.

If it is determined that the option 2 is not selected (step S153: NO), the control unit 211 then determines whether the option 3 is selected (step S155). If it is determined that the option 3 is selected (step S155: YES), the control unit 211 sets a point based on the movement history information of the user as the temporary destination (step S156), and ends the temporary destination setting processing.

If it is determined that the option 3 is not selected (step S155: NO), the control unit 211 then determines whether the option 4 is selected (step S157). If it is determined that the option 4 is selected (step S157: YES), the control unit 211 displays, for example, the temporary destination selection screen 510 on the display 214c, sets the point selected by the user on the temporary destination selection screen 510 as the temporary destination (step S158), and the ends the temporary destination setting processing.

If it is determined that the option 4 is not selected (i.e., the option 5 is selected) (step S157: NO), the control unit 211 displays, for example, the temporary direction selection screen 520 on the display 214c, sets a point located in the direction selected by the user on the temporary direction selection screen 520 as the temporary destination (step S159), and ends the temporary destination setting processing.

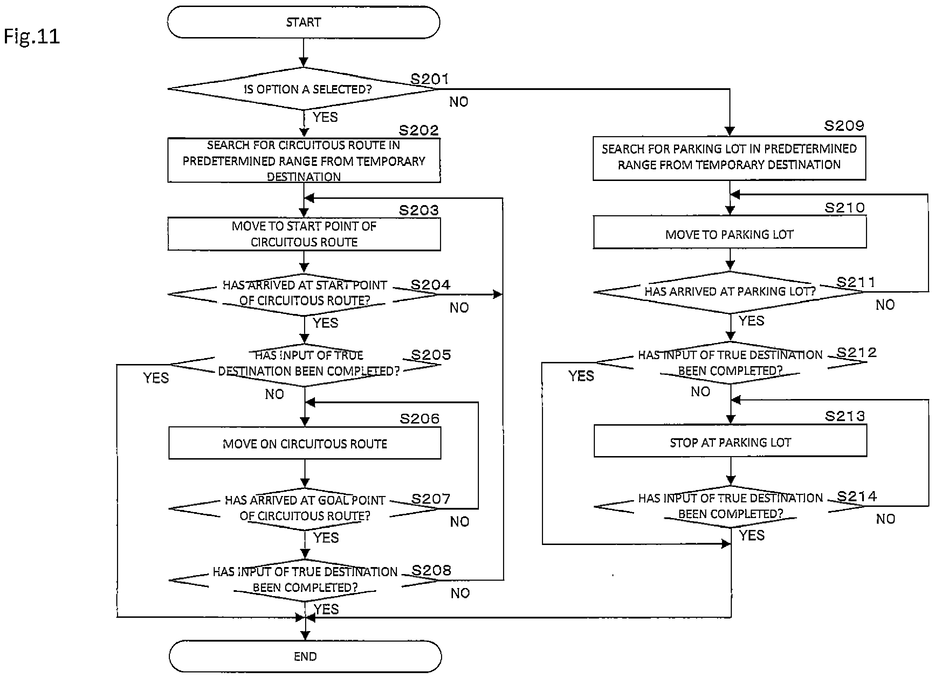

Next, the input standby processing by the control unit 211 of the automated driving control device 200 is described using the flowchart illustrated of Fig. 11.

First, the control unit 211 refers to the input standby control option information stored in the storage device 212, and determines whether the option A is selected (step S201). If it is determined that the option A is selected (step S201: YES), the control unit 211 searches for the circuitous route within the predetermined range from the temporary destination (step S202).

Next, the control unit 211 moves the vehicle C to the start point of the circuitous route (e.g., the point 404 in Fig. 7) by automated driving (step S203).

Next, the control unit 211 determines whether the vehicle C has arrived at the start point of the circuitous route (step S204). If it is determined that the vehicle C has not arrived at the start point of the circuitous route (step S204: NO), the control unit 211 proceeds to the processing of step S203, On the other hand, if it is determined that the vehicle C has arrived at the start point of the circuitous route (step S204: YES), the control unit 211 then determines whether the input of the true destination has been completed (step S205).

If it is determined that the input of the true destination has been completed (step S205: YES), the control unit 211 ends the input standby processing. On the other hand, if it is determined that the input of the true destination has not been completed (step S205: NO), the control unit 211 causes the vehicle C to move on the circuitous route by the automated driving (step S206).

Next, the control unit 211 determines whether the vehicle C has arrived at a goal point (e.g., the point 405 in Fig. 7) of the circuitous route (step S207). If it is determined that the vehicle C has not arrived at the goal point of the circuitous route (step S207: NO), the control unit 211 proceeds to the processing of step S206. On the other hand, if it is determined that the vehicle C has arrived at the goal point of the circuitous route (step S207: YES), the control unit 211 then determines whether the input of the true destination has been completed (step S208).

If it is determined that the input of the true destination has been completed (step S208: YES), the control unit 211 ends the input standby processing. On the other hand, if it is determined that the input of the true destination has not been completed (step S208: NO), the control unit 211 proceeds to the processing of step S203.

On the other hand, if it is determined in the processing of step S201 that the option A is not selected (i.e., the option B is selected) (step S201: NO), the control unit 211 searches for the parking lot within the predetermined range from the temporary destination (step S209).

Next, the control unit 211 moves the vehicle C to the parking lot by automated driving (step S210).

Next, the control unit 211 determines whether the vehicle C has arrived at the parking lot (step S211). If it is determined that the vehicle C has not arrived at the parking lot (step S211: NO), the control unit 211 proceeds to the processing of step S210. On the other hand, if it is determined that the vehicle C has arrived at the parking lot (step S211: YES), the control unit 211 then determines whether the input of the true destination has been completed (step S212).

If it is determined that the input of the true destination has been completed (step S212: YES), the control unit 211 ends the input standby processing. On the other hand, if it is determined that the input of the true destination has not been completed (step S212: NO), the control unit 211 stops (parks) the vehicle C in the parking lot (step S213).

Next, the control unit 211 determines whether the input of the true destination has been completed (step S214). If it is determined that the input of the true destination has not been completed (step S214: NO), the control unit 211 proceeds to the processing of step S213. On the other hand, if it is determined that the input of the true destination has been completed (step S214: YES), the control unit 211 ends the input standby processing.

As described above, the control unit 211 of the automated driving control device 200 (which is an example of the "temporary destination setting means" or "automated driving control means") according to the present example sets the temporary destination that functions as the temporary destination until the true destination that is the true destination of the vehicle C is set based on the movement history information of the user boarding the vehicle C (which is an example of the "moving object") capable of automated driving, and starts the automated driving of the vehicle C toward the temporary destination before the true destination is set.

Therefore, in the automated driving control device 200 according to the present example, the temporary destination is set until the true destination of the vehicle C is set, and the automated driving of the vehicle C is started toward the temporary destination before the true destination is set, so that it is possible to move by effectively using the required time for input of the true destination and speed up the arrival at the true destination. In addition, since the temporary destination is set based on the movement history information of the user boarding the vehicle C, it is possible to set the temporary destination that reflects the behavioral characteristics of the user and decrease the possibility of setting the temporary destination that may delay the arrival at the true destination.

In addition, the control unit 211 may select the temporary destination from the points that the user has visited in the past or the points that the user has passed within the predetermined range from the current point. In this case, it is possible to set the temporary destination that reflects the behavioral characteristics of the user boarding the vehicle C and decrease the possibility of setting such a temporary destination that may delay the arrival at the true destination.

Furthermore, the control unit 211 may select the temporary destination from the points that are located within the predetermined range from the current point and that the user has most frequently visited or passed most frequently in the past. In this case, it is possible to set the temporary destination that reflects the behavioral characteristics of the user boarding the vehicle C and decrease the possibility of setting such a temporary destination that may delay the arrival at the true destination.

Furthermore, the control unit 211 may set, as the temporary destination, the point that the user has passed most frequently in the past during moving from the current position. In this case, it is possible to set the temporary destination that reflects the behavioral characteristics of the user boarding the vehicle C and decrease the possibility of setting such a temporary destination that may delay the arrival at the true destination.

Furthermore, the control unit 211 (which is an example of an "acquisition means") acquires the current environmental information (which is an example of the "information relating to at least one of the current weather conditions and temperature"), the movement history information includes the points that the user has visited in the past and the past environmental information that is the information relating to at least one of the weather conditions and the temperature at the past visits, and the control unit 211 sets the temporary destination based on the current environmental information and the movement history information including the past environmental information. In this case, it is possible to select the point to be set as the temporary destination from the points that the user boarding the vehicle C has visited or passed in the past by considering the environmental information. That is, it is possible to set the temporary destination that further reflects the behavioral characteristics of the user and decrease the possibility of setting the temporary destination that may delay the arrival at the true destination.

Furthermore, the control unit 211 switches the automated driving toward the temporary destination to the automated driving toward the true destination based on the fact that the true destination is set during the automated driving. This allows the vehicle C to be moved to the true destination by the automated driving.

### EXPLANATION OF REFERENCE NUMERALS

- 1: automated driving control device
- 1A: temporary destination setting means
- 1B: automated driving control means
- 200: automated driving control device
- 211: control unit
- 211a: CPU
- 211b: ROM
- 211c: RAM
- 212: storage device
- 213: input device
- 214: display unit
- 214a: graphics controller
- 214b: buffer memory
- 214c: display
- 215: bus line
- 220: input/output interface unit
- 221: vehicle speed sensor
- 222: angular velocity sensor
- 223: acceleration sensor
- 224: steering angle sensor
- 225: GPS reception unit
- 226: data transmission/reception unit
- 227: wireless communication unit
- 228: automated driving execution unit

## Claims

1. An automated driving control device, comprising:
a temporary destination setting means that sets a temporary destination which functions as a temporary destination until a true destination, which is a true destination of a moving object capable of automated driving, is set based on movement history information of a user boarding the moving object; and
an automated driving control means that starts automated driving of the moving object toward the temporary destination before the true destination is set.

2. The automated driving control device according to claim 1, wherein
the temporary destination setting means selects the temporary destination from points that are located within a predetermined range from a current point and that the user has visited or passed in the past.

3. The automated driving control device according to claim 2, wherein
the temporary destination setting means selects the temporary destination from the points that are located within the predetermined range from the current point and that the user has visited or passed most frequently in the past.

4. The automated driving control device according to claim 1, wherein
the temporary destination setting unit sets, as the temporary destination, a point that the user has passed most frequently among the points that the user has passed while moving from a current position.

5. The automated driving control device according to claim 1, wherein
the temporary destination setting means sets a point presumed to be a point that the user is likely to visit as the temporary destination.

6. The automated driving control device according to any one of claims 1 to 5, further comprising:
an acquisition means that acquires current environmental information which is information relating to at least one of current weather conditions and temperature, wherein
the movement history information includes past environmental information which is information relating to at least one of the points that the user has visited or passed in the past and weather conditions or temperature at the past time, and
the temporary destination setting means sets the temporary destination based on the current environmental information acquired by the acquisition means and the movement history information including the past environmental information.

7. The automated driving control device according to any one of claims 1 to 6, wherein
the automated driving control means switches from automated driving toward the temporary destination to automated driving toward the true destination based on a fact that the true destination is set during the automated driving.

8. The automated driving control device according to any one of claims 1 to 7, wherein
the temporary destination setting means sets the temporary destination based on the movement history information and a direction in which the moving object moves from the current position and which is designated by a user boarding the moving object.

9. The automated driving control device according to any one of claims 1 to 8, further comprising:
a change means that changes a branch point to the temporary destination when the branch point exists on a route to the temporary destination.

10. The automated driving control device according to any one of claims 1 to 9, further comprising:
a calculation means that calculates required time for arrival until the moving object arrives at the temporary destination;
an acquisition means that acquires required input time until the user boarding the moving object completes the input of the true destination; and
a determination means that determines whether the user completes the input of the true destination before the moving object arrives at the temporary destination based on the required time for arrival and the required input time, wherein
when the determination means determines that the user completes the input of the true destination before the moving object arrives at the temporary destination, the automated driving control means starts moving the moving object toward the temporary destination by automated driving, and when the determination means determines that the input of the true destination by the user is not completed before the moving object arrives at the temporary destination, the automated driving control means puts the moving object on standby at the current position.

11. The automated driving control device according to any one of claims 1 to 10, further comprising:
a calculation means that calculates required time for arrival until the moving object arrives at the temporary destination;
an acquisition means that acquires required input time until the user boarding the moving object completes the input of the true destination; and
a determination means that determines whether the user completes input of the true destination before the moving object that is in the automated driving toward the temporary destination arrives at the temporary destination based on the required time for arrival and the required input time, wherein
when the determination means determines that the input of the true destination by the user is not completed before the moving object arrives at the temporary destination during the automated driving, the automated driving control means puts the moving object in a predetermined range of the temporary destination.

12. An automated driving control method by an automated driving control device, comprising:
a step of setting a temporary destination which functions as a temporary destination until a true destination, which is a true destination of a moving object capable of automated driving, is set based on movement history information of a user boarding the moving object; and
a step of starting automated driving of the moving object toward the temporary destination before the true destination is set.

13. An automated driving control program causing a computer to execute as:
a temporary destination setting means that sets a temporary destination which functions as a temporary destination until a true destination, which is a true destination of a moving object capable of automated driving, is set based on movement history information of a user boarding the moving object; and
an automated driving control means that starts automated driving of the moving object toward the temporary destination before the true destination is set.
